# EUROPEAN PATENT APPLICATION

(11) **EP 4 390 735 A1**
(43) Date of publication of application: **26.06.2024**
(21) Application number: 22383268.4
(22) Date of filing: 22.12.2022
(51) Int. Cl.: G06F 21/54, G06F 21/62, G06F 11/14

(54) **UPDATE AGENT WITH LINEAR MEMORY**

(71) Applicant: Giesecke+Devrient Mobile Security Germany GmbH, 81677 München (DE)
(72) Inventor: GIFRE, Clara, 08028 Barcelona (ES); PATIÑO, David, 08820 El Prat de Llobregat (ES); GOMEZ, Xavier, 08840 Viladecans (ES); MORON I PEIRO, Oriol, 08720 Vilafranca del Penedes (ES); RUAU, Mariano, 08907 L'Holspitalet de Llobregat (ES); NARANJO GALLARDO, Patricia, 08191 Rubi (ES)
(74) Representative: Giesecke+Devrient IP

(57) **Abstract**

In a first aspect, the present invention relates to a method for securing objects at an update agent on a secure element. The method comprises the steps of creating a buffer page at an operating system of the secure element, the buffer page having a pre-defined size; repeatedly storing to be secured objects sequentially in the buffer page; and upon the buffer page being filled to the pre-defined size, writing the buffer page to a memory of the update agent. According to further aspects, the present invention relates to a respective secure element and a computer-program product in relation to other aspects of the invention.

## Description

The present invention relates to secure elements in general and in particular to a secure element fitted with an update agent with a linear memory structure for optimal memory management during software updates and a corresponding method for securing objects during software updates for data recovery.

### BACKGROUND OF THE INVENTION

Smart cards are widely used in a variety of systems such as mobile phones, payment cards, access cards, to provide identification, authentication, data storage and application processing.

Where the smart card contains security-critical applications and sensitive data, such as in the case of payment cards and the like, a secure element is used to store the data. A secure element is a tamper resistant element, TRE, that provides a secure memory and execution environment in which application code and application data can be securely stored and administered. The secure element ensures that access to the data stored on the card is provided only when authorized. Such a secure element may exist in any form factor such as UICC, embedded SE, smartSD, smart microSD, etc.

A secure element may include one or more security domains (SDs), each of which includes a collection of data, such as operating system, personalization data, packages, applets, applications, and the like, which are authenticated using security keys. The operating system and applications are stored within the secure element in volatile and non-volatile memory modules, and are executed in a secured processor of the secure element.

The specification Global Platform Card Technology Open Firmware Loader for Tamper Resistant Element v1.3 describes a standardized mechanism for loading software (that is, use case dependent data which may contain the operating system and application data) into a secure element. In particular, an Open Firmware Loader, OFL, or update agent, is provided inside the secure element, and configured to receive images of operation system and personalization data, to perform security checks - particularly authentication and integrity checks - on the image, and to trigger installation of the image contents into a memory of the secure element, so as to install in the secure element an operable operating system and personalization data.

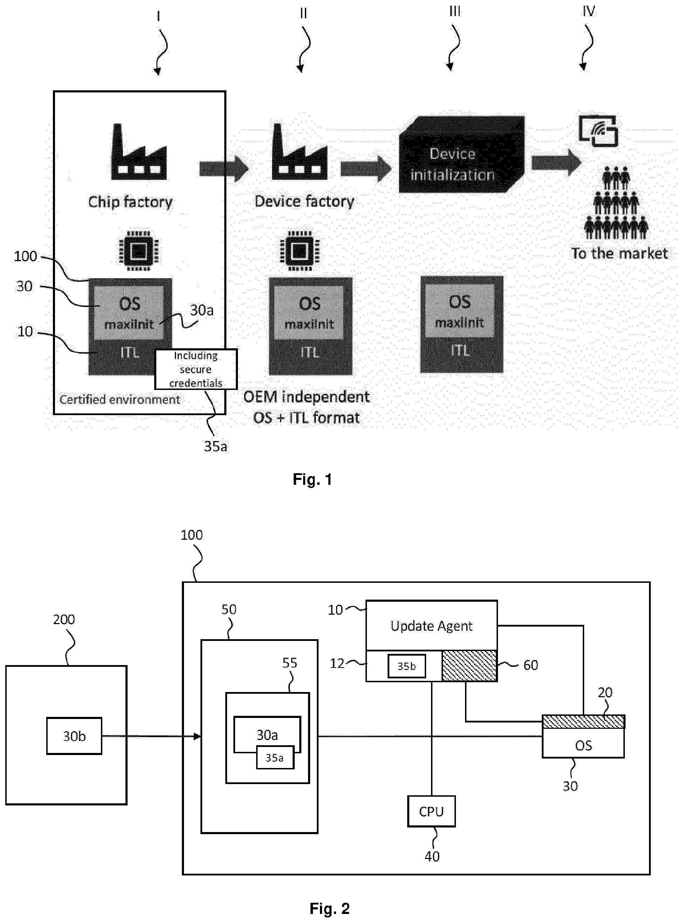

Fig. 1 shows a schematic representation of the conventional production flow for loading software (e.g., an operating system, OS) into a secure element. The upper row shows the entities responsible for the corresponding production phase (I, II, III, IV), while the lower row shows the content of the secure element (i.e., chip). During a first production phase I at a chip manufacturer site (i.e., the chip factory), the chip manufacturer provides for a secure element 100 to be loaded with trusted software, such as a secure operating system (OS) 30. At the chip production site, the trusted software is personalized with credentials, which are diversified data including keys or certificates 35a, and which upon personalization, are stored in a personalized software image, e.g., a personalized operating system, OS, 30a referred to as "maxiinit" in Fig. 1. The trusted software or OS may be personalized by specific commands, so called APDUs, that are sent from an external personalization device at the chip production site to the secure element. Other personalization processes, such as for instance, in-factory personalization, are applicable as well.

The personalized secure OS image 30 is loaded together with the update agent 10 inside the chip. The chip with its personalized software is then, at a device manufacturer's site, embedded in a portable card-like device, such as an (e)UICC or (e)SIM (phase II), or can be delivered to another device manufacturer's site to be included (phase III) in an electronic end device like a smart phone, a computer, a car, a measurement equipment, etc., and finally released to the market (phase IV).

By following this conventional process, every chip is produced with its own diversified data. The diversified data is loaded in the chip at the chip factory (phase I), because for security reasons certain diversified data, such as the credentials including the keys and certificates, have to be loaded in the certified environment during chip production and stored in a user memory area, such as the memory area on the update agent including Data and ROM.

When a software or OS update is needed to be performed at the secure element, a software image or operating system image is loaded from an external image server 200 into the memory area of the SE 100. Either before the image upload or intrinsically in the course of the image upload the installed software or the installed operating system is completely deleted from memory area together with all related or associated diversified and personalization data 35a, respectively. This deletion is sometimes referred to as "Full Reflash" and is required upon software update, because ROM updates are not possible. Upon Full Reflash the memory area is deleted, that is, the complete installed software or complete installed operating system is deleted together with its personalization data 35a, such as private credentials and cryptographic keys, and any specific data required to operate the installed software or operating system. As the diversified data is not being stored in the "maxiinit" file, the diversified data cannot be recovered after a Full Reflash.

To restore the diversified data after the Full Reflash, the diversified data is stored in the OFL or update agent's Data Memory Region during the production process. That is, diversified data is stored once at the update agent, at card completion time, during the first APDU time, and can be recovered after a Full Reflash to be used to achieve operability of the updated software of operating system.

The problem with this solution is, however, that every object (i.e., stored data) occupies at least one OFL memory page, while two or more objects cannot be stored within a single page. Thus, if a stored object does not use the complete page, the remaining page is lost, resulting in a less optimal memory usage at the secure element.

Accordingly, there remains a need to provide a solution for an efficient memory management at a secure element which overcomes the above-mentioned drawbacks.

### SUMMARY OF THE INVENTION

The present invention addresses the above object by the subject-matter covered by the independent claims. Preferred embodiments of the invention are defined in the dependent claims.

According to a first aspect of the present invention, there is provided a method for securing objects at an update agent on a secure element, the secure element comprising the update agent and an operating system. In a first step a buffer page is created at the operating system, the buffer page having a pre-defined size. Objects to be secured are stored in an iterative step in the buffer page in a sequential order, until the buffer page has been filled up. Upon the buffer-page being full, that is, being filled to the pre-defined size, the buffer page is written to a memory of the update agent.

Through this application the expression "software" refers to any trusted software to be loaded and executed in the secure element. Examples include firmware, an operating system (OS), and any other use-case dependent secure applications. The expression "software image" (or "OS image") refers to a generic data format encapsulating a software version and cryptographic data to be used by the operating system or an agent of the SE, such as the update agent according to the present invention.

Preferably, the objects comprise diversified data of software installed on the secure element, in particular, secure credentials and/or cryptographic keys, which the installed software has been personalized with.

The buffer page is thus a temporary created page at the OS, which is written to the memory of the update agent every time is being filled. The size of the page may be pre-set when the operating system is first loaded onto the secure element, or alternatively, may be (dynamically) set by the update agent, in which case it is communicated to the OS. The buffer page is managed by the OS, due to the fact that the update agent does not allow the OS to write/read more than one page at a time.

Copying the full buffer page to the update agent, provides for an efficient memory management at the update agent, since page space at the update agent is optimally used, as more than one object can be stored within one page and thus the page capacity is optimally used, hence reducing the amount of memory for storing diversified data needed for a Full Reflash.

In some embodiments of the present invention, the method comprises after writing the buffer page to the memory of the update agent, storing new objects in the buffer page, while overwriting previously stored objects.
This allows to keep track of all objects at the OS that need to be secured before a Full-Reflash process is started and to store these objects securely at the update agent with optimal memory usage at the update agent.

In some embodiments of the present invention, content of the buffer page is masked using mask keys before being written to the update agent memory. Content of the buffer page is protected by being masked to ensure privacy of the OS objects, which contain personalization and other sensitive data.

Preferably, the mask keys are stored at the update agent at a first page of a contiguous address space in the update agent's memory. This allows to unmask the objects when being restored from the update agent memory to the OS after the Full-Reflash process.

In some embodiments of the present invention, writing the buffer page to the memory of the update agent comprises storing content of the buffer page at subsequent pages after the first page in the contiguous address space.

This allows to store all objects in a linear memory area at the update agent in the same order they are being saved in the OS. Only the first page of the contiguous address space is blocked for storing the mask keys used for masking buffer content when copied to the update agent's memory and for unmasking when content is restored from the update agent back to the OS.

Preferably, each of the subsequent pages is fully written before content of the buffer page is stored in a new subsequent page of the contiguous address space. This ensure that no memory space is lost at the update agent, as memory page is full used, before a new page is being written.

Preferably, content of a new buffer page is written in the contiguous address space starting at a first free address of the contiguous address space, indicating a subsequent page not fully written.

In some embodiments of the present invention, the content of each buffer page is stored in the contiguous address space at the update agent as a sequence of objects, wherein consecutive objects are stored at consecutive addresses in the contiguous address space.

This ensure, that objects are stored at the update agent in the same order they are being saved in the OS. Upon restoring the objects to the OS, the order is thus preserved.

In some embodiments of the present invention each object comprising a header for storing object metadata and a data field.

As each object is stored at the update agent together with a corresponding header containing metadata, there is no need to block a further memory page at the update agent to keep track of object metadata. Memory page consumption is thus further optimized at the update agent.

Preferably, the header of each object comprises security domain, SD, information. This kind of metadata comprises data pertaining to the location of the objects at the operating system, which will be needed upon restoring the objects at the OS after Full Reflash.

Preferably, the header of each object comprises object type information indicative of a kind of the stored object, such as but not exclusively, a key type, a certificate type or an identifier, such as, a EID, CIN or IIN card.

According to a second aspect of the present invention, there is provided a secure element, comprising an update agent and an operating system. The update agent comprises a memory to store objects to be secured. The secure element is configured to create a buffer page at the operating system, the buffer page having a pre-defined size; repeatedly store to be secured objects sequentially in the buffer page; and upon the buffer page being filled to the pre-defined size, write the buffer page to the memory of the update agent.

In some embodiments according to the second aspect, the secure element is configured to perform the method according to the first aspect.

In some embodiments according to the first and/or the second aspect the objects comprise diversified data of software installed on the secure element, in particular, secure credentials and/or cryptographic keys, which the installed software has been personalized with.

According to a third aspect of the present invention, there is provided a computer-program product for use in conjunction with a secure element, preferably the secure element according to the second aspect, in an electronic device, the computer-program product comprising a non-transitory computer-readable storage medium and a computer-program mechanism embedded therein, to load a software into the secure element in the electronic device, the computer-program mechanism including instructions for creating a buffer page at an operating system of the secure element, the buffer page having a pre-defined size; instructions for repeatedly storing to be secured objects sequentially in the buffer page; and instructions for writing the buffer page to a memory of the update agent upon the buffer page being filled to the pre-defined size

The proposed method, secure element and computer-program product allow for an efficient memory management using a linear memory structure at the update agent for storing objects to be secured before a Full Reflash update at the secure element. By using a linear memory, page space at the update agent is optimally used, as more than one object can be stored within a page and thus the page capacity is optimally used, reducing the amount of empty pages.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which:
FIG. 1 shows a schematic representation of the conventional production flow of a secure element;
FIG. 2 shows the structure of a secure element according to the present invention;
FIG. 3 shows a flow diagram illustrating a method according to the present invention;
FIG. 4a shows a schematic representation of the update agent's linear memory space according to the present invention; and
FIG. 4b shows a schematic representation of the content of the linear memory space of Fig. 4a.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

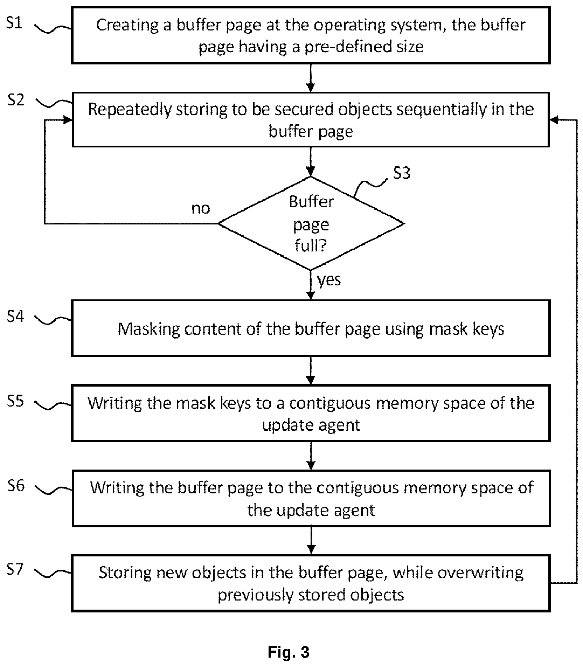

Fig. 2 shows the structure of a SE 100 according to an embodiment. Fig. 3 shows the steps of the method according to the invention in connection with Fig. 2.

The SE 100 shown in Fig. 2 is a tamper resistant element, containing the update agent 10, an operating system, OS, 30, and a processor, CPU, 40. Both the update agent 10 and the OS 30 may be stored in a memory of the SE 100, such as the non-volatile memory 50. The OS 30 and the update agent 10 are independent entities that can communicate with each other, for instance over an Application Programming Interface, API. Memory 50 is a non-volatile memory of the SE 100 that comprises a memory area 55 in which software is stored, which is installed on the SE 100 and executable by the CPU 40. Such installed software may be an executable application or program, identified by reference numeral 30a in Fig. 2, that provides a certain functionality to the secure element 100, or may even be the operating system 30 of the secure element 100, which, in the present context also is an installed software that may be required to be updated at a certain point of the life cycle of the SE 100. The OS is a standard operating system of secure elements or smart cards, for example based on the Java Card platform. The personalized OS 30a of Fig. 2 is identified in Fig. 1 as "maxinit".

The update agent 10 may be a functional part of or realized as a functionality of the operating system 30 or a loader entity allowing the provisioning of software (such as, for instance, use case dependent firmware) within the SE 100. Such loader entities are also referred to as Open Firmware Loaders, OFLs, or update agents in the art. Update agents are the main entities in charge of loading software or software images into the secure element as well as any other procedure related to it, such as update, restore, rollback or the like. In Figs. 2 software images to be loaded onto the SE 100 are referred to by reference numerals 30b, identifying an arbitrary software image, or an operating system image. The update agent 10, regardless of whether it is realized as an independent entity or as functional part of the operating system 30, is also loaded onto the SE 100 during factory production, because it reflects a security critical entity of the SE 100 (Fig. 1, phase I).

The update agent 10 may contain its own reserved memory space in form of a memory structure 12, to store sensible data thereon, for instance personalization data and/or authentication data, the latter being used to authenticate and/or decrypt a software/OS image 30b before it is personalized. At some point of the personalization process, the memory structure 12 of the update agent 10 may therefore contain personalization data 35b and the operating system 30 may have access to at least part of the memory structure 12.

According to Fig. 2, an executable software or the operating system 30a is installed on the SE 100 in a personalized way. The installed software 30a therefore has personalization data 35a associated therewith, for instance secure credentials and/or cryptographic keys, that ensure that the installed software is an authenticated, trusted and untampered software. The installed software 30a and the personalization data 35a are stored together in the memory area 55 of the SE 100. Within the memory area 55, the installed software 30a and the respective personalization data 35a may be stored in an intertwined fashion, because upon installation the software 30a is equipped or enriched with personalization data 35a in various ways. The software 30a may have been personalized and installed on the SE 100 during factory production of the SE 100, because personalization is a security-critical operation that conventionally is performed within a certified environment of a production site of the manufacturer of the SE 100.

The SE 100 in the state as illustrated in Fig. 2 has completed the initial chip production (Fig. 1, phase I) and has left the chip manufacturer's certified environment. In this situation, a copy 35b of the personalization data 35a has been secured in the memory structure 12 of the update agent 10 and a software image 30b is provided by an external server 200 to be loaded onto the secure element 100 in order to update and replace the installed software 30a. The software image 30b represents a software update of the installed software or operating system 30a. The external server 200 may represent an entity which communicates with the SE 100. It can be a LPA (Local Profile Assistant), a terminal, or whatever device it is that the SE may be in connection with. Particularly, the external server 200 is or comprises an image delivery server and provides during a subsequent production phase (Fig. 1, phases II, III, IV) the software image or operating system image 30b to the SE through a customized interface.

When a new software image or OS image 30b is loaded from the external server 200 into the memory area 55 of the SE 100, the previously installed software or OS 30a is entirely deleted from the memory area 55 together with all corresponding diversified or specific personalization data 35a. That is, the complete installed software or complete installed operating system 30a is deleted together with its diversified or personalization data 35a, such as private credentials and cryptographic keys, and any specific data required to operate the installed software or operating system 30a. The diversified data is not contained in the new software image, therefore, the newly updated software or OS image cannot be personalized, rendering thus the secure element useless.

This problem is solved by embodiments according to the present invention by implementing an efficient memory management at the secure element of Fig. 2, which allows during software updates to securely store diversified data at the update agent with as less memory as needed, and after software updates to recover the diversified data, such that the updated software respectively operating system can be personalized and thus made fully operational.

In particular, a linear memory space (identified by reference numeral 60 in Fig. 2) is created at the update agent 10 within the SE 100, in which objects to be secured are stored before a Full Reflash update is performed at the SE 100. The linear memory space 60 allows to store more than one object (i.e., diversified data, personalization data) within a page and thus to optimally use the update agent's memory capacity by reducing the amount of empty memory pages at the update agent.

The linear memory space 60 is a contiguous area, or contiguous address space, within the memory structure 12. The linear memory space 60 is populated by writing objects needed to be saved from the OS 130 in a page-wise manner. As the memory structure 12 is not deleted or otherwise modified during a Full Reflash, the objects stored therein are recoverable after a new software or OS image has been loaded into the SE.

The update agent allows the OS to write/read only one page at a time. To achieve an efficient use of memory space at the update agent, it is desired to force the OS to entirely fill up a page before it is written to the update agent, as opposed to the OS writing each object separately. The latter solution would consume a large amount of memory at the update agent, since every single object will have to be stored in a separate memory page at the update agent.

Therefore, according to the present invention, when an object has to be saved before a software or OS image update, the SE 100 creates a buffer page 20 at the OS 130. This buffer page 20 is used by the OS 130 to temporarily store objects to be saved at the update agent. When the buffer page 20 has been filled up, the buffer page 20 is being written to the contiguous memory area 60 of the update agent.

This method is illustrated by the flow chart of Fig. 3. The flow chart shows steps of the method for securing objects at an update agent, for instance the update agent 10 of Fig. 2.

In step S1 the secure element 100 creates a buffer page 20 at the OS 130. The buffer page has a pre-defined size, which may be set when the initial OS has been loaded onto the SE during factory production (i.e., phase I in Fig. 1). Alternatively, the update agent 10 may have the capability to dynamically change the buffer page size according to its own memory structure 12.

Step S2 is performed under the control of the OS 130. The OS stores objects to be secured sequentially in the buffer page 20. Step S2 is repeated until the buffer page has been filled up (i.e., step S3). During this process, the last object might be cut, that is, only a part of the object is stored in the buffer page due to the buffer page reaching full size.

When the buffer page 20 has been filled to the pre-defined size, it is written in step S6 to a memory 60 of the update agent 10.

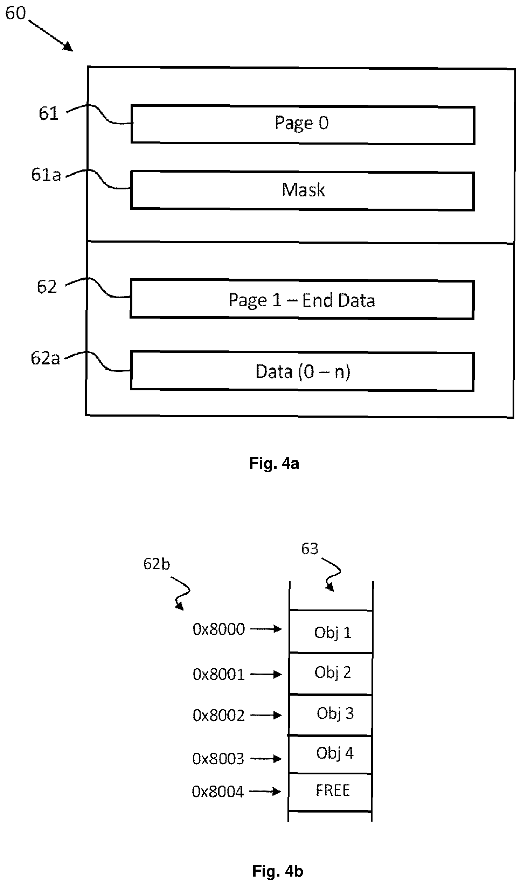

After the buffer page has been written to the update agent, new objects (or the remaining part of previously stored last object) are stored in the buffer page, while overwriting previously stored objects (step S7). Alternatively, the buffer page 20 may be explicitly emptied before new objects are stored therein.
Thus, the buffer page 20 is a temporary page at the OS, which is created once and which temporarily stores objects before being written to the update agent. The full buffer page is written in a single operation to a corresponding page at the update agent, as will be described below with reference to Figs. 4a and 4b.

Preferably, content of the buffer page is protected using mask keys (i.e., step S4 in Fig. 3) before being written to the update agent memory. This ensures privacy of the OS objects, as these objects contain personalization and other sensitive data.

Preferably, the mask keys are stored at the update agent 10 in step S5 at a first page of the linear memory space 60 in the update agent's memory 12. This allows to unmask the objects when being restored from the update agent memory to the OS after the Full-Reflash process.

Fig. 4a shows a schematic representation of the update agent's linear memory space 60 according to the present invention, while Fig. 4b shows a schematic representation of content of the contiguous memory space of Fig. 4a.

The linear memory space 60 is created as a flat memory model organized in a single contiguous address space. The processing unit, such as the CPU 40 in Fig. 2 can access the linear memory space 60 directly as well as linearly, through a simple memory management scheme with great flexibility and minimum hardware requirements. For the memory-limited update agent a linear memory structure provides for an optimal memory usage.

Objects 63 are stored in the linear memory area 60 beginning at page 1 (reference numeral 62) using as many pages as needed till the last object is stored ("End Data").

Large objects may be split between several pages, while several smaller objects can be fitted within a single page. As illustrated in Fig. 4b, objects are stored in a sequential order in the data area 62a of Fig. 4a. Hexadecimal numbers, 62b, are used to denote the exact place of a memory chunk. Data denotes the value stored in that memory. For instance, "Obj1" is stored at address 0x8000.

When a new buffer page is being written to the memory space 60, the first free address is looked up (in the example of Fig. 4b, this is the address 0x8004) indicating the first free memory place the next object can be stored within. In this way, consecutive objects are stored at consecutive addresses in the contiguous address space. This ensure, that objects are stored at the update agent in the same order they are being saved in the OS. Upon restoring the objects to the OS, the order is thus preserved.

Preferably, a further page, 61, directly preceding the data/object page(s) is used for storing the mask keys 61a.

Preferably, each object is stored with a header and a data field. The header comprises object metadata. Examples of object metadata include security domain information on the location of the objects at the operating system, which will be needed upon restoring the objects at the OS after Full Reflash, and object type information.

By storing each object together with a corresponding header containing meta information, there is no need to block a further memory page at the update agent to keep track of object metadata. Memory page consumption is thus further optimized at the update agent.

The methods and apparatus as described through the embodiments above, provides for an efficient memory management using a linear memory structure at the update agent for storing objects to be secured before a Full Reflash update is performed. By using a linear memory, page space at the update agent is optimally used, as more than one object can be stored within one page and thus the page capacity is optimally used, hence reducing the amount of memory needed for storing diversified data required before the Full Reflash. In addition, the linear memory structure created using the OS's temporal buffer page allows to store objects at the update agent in the same order they are being saved in the OS. Upon restoring the objects to the OS, the order is thus preserved.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A method for securing objects (63) at an update agent (10) on a secure element (100), the secure element (100) comprising the update agent (10) and an operating system (30), the method comprising:
- creating (S1) a buffer page (20) at the operating system (30), the buffer page (20) having a pre-defined size;
- repeatedly storing (S2) to be secured objects sequentially in the buffer page (20); and
- upon the buffer page (20) being filled (S3) to the pre-defined size, writing (S6) the buffer page (20) to a memory (12) of the update agent (10).

2. The method according to claim 1, wherein the objects (63) comprise diversified data (35a) of software installed on the secure element (100), in particular, secure credentials and/or cryptographic keys, which the installed software has been personalized with.

3. The method according to claim 1 or 2, further comprising after writing the buffer page (20) to the memory (12) of the update agent (10), storing (S7) new objects in the buffer page (20), while overwriting previously stored objects.

4. The method according to any one of the preceding claims, further comprising masking (S4) content of the buffer page (20) using mask keys (61a) before being written to the update agent memory (12), and storing (S5) the mask keys at the update agent (10) at a first page (61) of a contiguous memory are (60) in the memory (12).

5. The method according to claim 4, wherein writing the buffer page (20) to the memory are (60) of the update agent (10) comprises storing content of the buffer page (20) at subsequent pages (62) after the first page (61) in the memory area (60).

6. The method according to claim 5, wherein each of the subsequent pages (62) is fully written before content of the buffer page (20) is stored in a new subsequent page of the memory area (60).

7. The method according to claim 6, wherein content of a new buffer page is written in the contiguous address space (60) starting at a first free address.

8. The method according to any one of claims 5 to 7, wherein the content of each buffer page (20) is stored in the contiguous address space (60) at the update agent (10) as a sequence of objects (63), consecutive objects being stored at consecutive addresses (62b) in the contiguous address space (60).

9. The method according to claim 8, wherein each object (63) comprising a header for storing object metadata and a data field.

10. The method according to claim 9, wherein the header of each object comprises security domain information.

11. The method according to claim 9 or 10, wherein the header of each object (63) comprises object type information, preferably a key type, a certificate type or an identifier.

12. A secure element (100), comprising an update agent (10) and an operating system (30), the update agent (10) comprising a memory (12) to store objects (63) to be secured, the secure element (100) being configured to:
- create a buffer page (20) at the operating system (30), the buffer page (20) having a pre-defined size;
- repeatedly store to be secured objects (63) sequentially in the buffer page (20); and
- upon the buffer page (20) being filled to the pre-defined size, write the buffer page (20) to a contiguous memory area (60) in the update agent (10) memory (12).

13. The secure element (100) according to claim 12, further configured to perform the method according to any one of claims 2 to 11.

14. The secure element (100) according to claims 12 or 13, wherein the objects (63) comprise diversified data of software installed on the secure element (100), in particular, secure credentials and/or cryptographic keys, which the installed software has been personalized with.

15. A computer-program product for use in conjunction with a secure element (100) in an electronic device (200), the computer-program product comprising a non-transitory computer-readable storage medium and a computer-program mechanism embedded therein, to load a software into the secure element in the electronic device, the computer-program mechanism including:
- instructions for creating a buffer page (20) at an operating system (30) of the secure element (100), the buffer page (20) having a pre-defined size;
- instructions for repeatedly storing to be secured objects (63) sequentially in the buffer page (20); and
- instructions for writing the buffer page (20) to a contiguous memory area (60) of the update agent (10) upon the buffer page (20) being filled to the pre-defined size.
